# EUROPEAN PATENT SPECIFICATION

(11) **EP 1 239 976 B1**
(45) Date of publication and mention of the grant of the patent: **06.08.2003**
(21) Application number: 99966537.5
(22) Date of filing: 21.12.1999
(51) Int. Cl.: B05D 7/14, B05D 7/00

(54) **COPOLYMER PRIMER FOR ALUMINUM ALLOY FOOD AND BEVERAGE CONTAINERS**
COPOLYMERISAT ALS GRUNDIERUNG FÜR ALUMINIUMLEGIERUNG
APPRET DE COPOLYMERE POUR CONTENANTS D'ALIMENTS ET DE BOISSONS EN ALLIAGE D'ALUMINIUM

(43) Date of publication of application: 18.09.2002
(73) Proprietor: Alcoa Inc., Pittsburgh, PA 15212-5858 (US)
(72) Inventor: NITOWSKI, Gary A., Alcoa Technical Center, Alcoa Center, PA 15069-0001 (US); GUTHRIE, Joseph D., Alcoa Technical Center, Alcoa Center, PA 15069-0001 (US); HARENSKI, Joseph P., Alcoa Technical Center, Alcoa Center, PA 15069-0001 (US); JOHNSON, Daniel C., Alcoa Technical Center, Alcoa Center, PA 15069-0001 (US)
(74) Representative: Ebner von Eschenbach, Jennifer
(86) International application number: US9930539
(87) International publication number: WO01045866

(56) References cited:
- EP-A- 0 626 273
- US-A- 3 196 039
- US-A- 3 224 908
- US-A- 5 103 550
- US-A- 6 020 030
- US-A- 6 030 710

## Description

The present invention relates to a new food container body or to a new food or beverage container end panel and to a process for forming same from aluminum alloy sheet. More specifically, the invention relates to polymer coated aluminum alloy sheet having a primer layer comprising a reaction product of an oxide or hydroxide layer and a vinylphosphonic acid-acrylic acid copolymer.

Although aluminum protects itself against corrosion by forming a natural oxide coating, the protection is not complete. In the presence of moisture and electrolytes, aluminum alloys corrode much more rapidly than pure aluminum.

Accordingly, there is a need to treat aluminum alloy substrates with primers or other chemicals that provide improved corrosion resistance as well as strong bonding affinity for polymers.

In the prior art, chemical conversion coatings have been formed on aluminum alloys by "converting" a surface of the metal into a tightly adherent coating. part of which consists of an oxidized form of aluminum. Chemical conversion coatings provide high corrosion resistance and improved bonding affinity for polymer coatings. A chromate conversion coating is typically provided by contacting aluminum with an aqueous solution containing hexavalent or trivalent chromium ions. phosphate ions and fluoride ions. In recent years, concerns have arisen regarding the pollution effects of chromates and phosphates discharged into waterways by such processes. Because of the high solubility and strongly oxidizing character of hexavalent chromium ions, expensive waste treatment procedures must be employed to reduce the hexavalent chromium ions to trivalent chromium ions for waste disposal.

Attempts have been made in the prior art to produce acceptable chromate-free conversion coatings for aluminum. For example, some chromate-free conversion coatings contain zirconium, titanium, hafnium and/or silicon, sometimes combined with fluorides, surfactants and polymers such as polyacrylic acid. In spite of the extensive efforts that have been made previously, there is still no entirely satisfactory non-chromate conversion coating or primer for improving the adhesion and corrosion resistance of polymer coated aluminum alloy substrates.

A principal objective of our invention is to provide polymer coated aluminum alloy sheet having a primer layer comprising a reaction product of a vinylphosphonic acid-acrylic acid copolymer and an aluminum oxide or hydroxide layer on the sheet.

A related objective of our invention is to provide a primer layer for aluminum alloy sheet that is free of chromium compounds.

Additional objectives and advantages of our invention will become apparent to persons skilled in the art from the following detailed description.

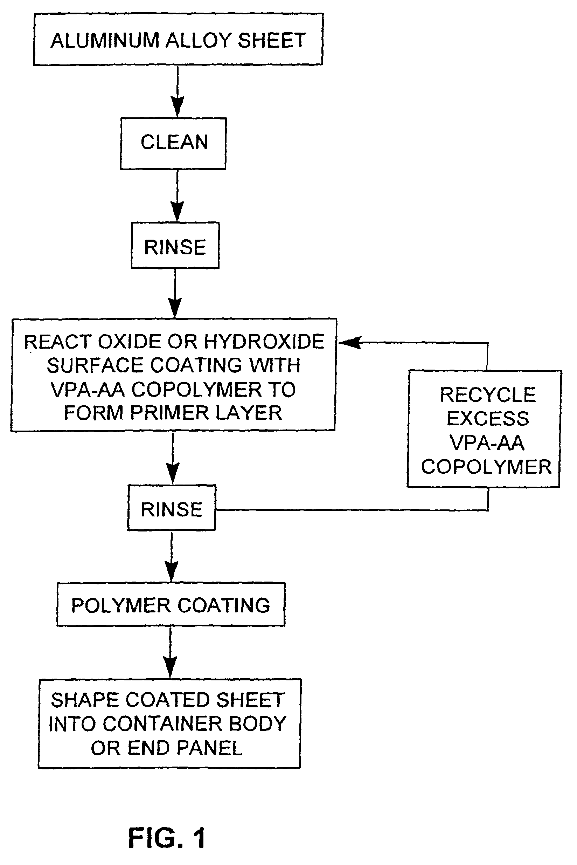

Figure 1 is a flowsheet diagram of the process of the present invention.

In accordance with our invention, there is provided a process for making polymer coated aluminum alloy sheet suitable for shaping into a food container body or food or beverage container end panel.

Some aluminum alloys suitable for making polymer coated container bodies or container end panels include aluminum-magnesium alloys of the AA 5000 series and particularly the AA 5042 and AA 5182 alloys.

Aluminum alloys suitable for container end panels such as AA 5182 are provided as an ingot or billet or slab by casting techniques known in the art. Before working, the ingot or billet is subjected to elevated temperature homogenization. The alloy stock is then hot rolled to provide an intermediate gauge sheet. For example, the material may be hot rolled at a metal entry temperature of about 700°-975°F to provide an intermediate product having a thickness of about 0.130 inch to 0.190 inch. This material is cold rolled to provide a sheet ranging in thickness from about 0.008 to 0.015 inch. We prefer AA 5182 aluminum alloy sheet in either the H19 or H39 temper. Aluminum alloy 5042 sheet for end panels is preferably in the H19 temper.

Aluminum alloys such as AA 5042 are provided as an ingot that is homogenized. This is followed by hot rolling to an intermediate gauge of about 0.125 inch. Typically, the intermediate gauge product is annealed, followed by hot rolling and then cold rolling to a final gauge product having a thickness of about 0.008 to 0.015 inch. The sheet is coated with a polymer and then drawn and redrawn into food container bodies. We prefer AA 5042 aluminum alloy sheet in the H2E72 temper.

The natural oxide coating on an aluminum alloy sheet surface is generally sufficient for practice of our invention. The natural oxide coating ordinarily has a thickness of approximately 30-50 angstroms. For better protection against corrosion, the oxide coating can be grown by treatments such as anodic oxidation or hydrothermal treatment in water, water vapor or aqueous solutions.

Aluminum alloy sheet of the invention is generally cleaned with an alkaline surface cleaner to remove any residual lubricant adhering to the surface, and then rinsed with water. Cleaning can be avoided if the residual lubricant content is negligible.

The cleaned sheet surface is then primed with a primer composition comprising an aqueous solution of about 1-20 g/L of a vinyl phosphonic acid-acrylic acid copolymer (VPA-AA copolymer). Solutions containing about 4-10 g/L of the copolymer are preferred. The copolymer usually comprises about 5-50 mole % vinylphosphonic acid, preferably about 20-40 mole %. A particularly preferred VPA-AA copolymer contains about 30 mole % VPA and about 70 mole % AA. The solution has a temperature of about 100°-200°F, more preferably about 120°-180°F. A particularly preferred solution has a temperature of about 170°F.

The sheet surface may be dipped into the primer composition or the composition may be roll coated or sprayed onto the sheet surface. A preferred continuous cleaning and pretreating line is operated at about 1000-1500 feet per minute. A contact time of about 6 seconds between the sheet surface and the primer composition is sufficient when the line is operated at 1000 feet per minute. The VPA-AA copolymer reacts with the oxide or hydroxide coating to form a primer layer on the sheet surface.

Optionally, the primed sheet may be rinsed with water to remove a portion of the VPA-AA copolymer unreacted with the oxide or hydroxide coating. The rinse water preferably has a temperature of about 170°-180°F. The rinse water is concentrated by removing excess water so that the VPA-AA copolymer can be recycled. Some preferred concentrating techniques include reverse osmosis and membrane filtration.

The primed sheet is coated with a polymer composition that preferably includes an organic polymer and pigment particles dispersed in an organic solvent. Three preferred coating polymers are the epoxies, polyvinyl chloride and polyesters. The suitable epoxies include phenolic-modified epoxies, polyester-modified epoxies and epoxy-modified polyvinyl chloride.

Alternatively, the primed sheet may be coated by electrocoating, slot coating or extrusion coating.

The pigment particles are preferably titanium dioxide, alumina or silica. We prefer titanium dioxide particles in the 0.5 to 10 microns median particle size range.

The polymer coated sheet is dried, coiled, and then finally shaped into container bodies or container end panels.

In accordance with the present invention, some 2 in. x 4 in. samples of AA 5182 aluminum alloy sheet were cleaned, primed with a vinyl phosphonic acid-acrylic acid copolymer and then coated with a polyvinyl chloride coating composition. The VPA-AA copolymer contained 30 mole % VPA units and 70 mole % AA units.

The PVC coated samples were tested for resistance to blushing and for coating adhesion. One set of samples was placed in a beer can filled with beer, the can was sealed, and then the can was heated to 180°F for 30 minutes in a water bath. Another set of samples was immersed for 30 minutes in a deionized water bath heated to 180°F.

The test samples were removed from their test environments, rinsed with deionized water and dried. Blushing was recorded, if evident by visual observation. Coating adhesion was tested by scribing a crosshatched configuration (horizontal and vertical lines about 1/8 inch to 3/16 inch apart) through the coating to the base metal with a knife blade. A high tack tape (3M No. 610) was sealed over the crosshatched area. After 5 seconds contact time, the tape was removed rapidly by pulling at approximately a 90° angle to the metal surface. Results of the tape test with the P(VPA-AA) primer and similar tape tests with polyvinyl phosphonic acid (PVPA) and polyacrylic acid (PAA) primers are shown below.

**Table 1-**

| Tape Test Results | | |
|---|---|---|
| | Test Environment | |
| Pretreatment | Beer | Water |
| PVPA-4.1 g/L 180°F Bath | Fail | Fail |
| PVPA-7.4 g/L 180°F Bath | Fail | Fail |
| PAA-1.0 g/L 140°F Bath | Fail | Fail |
| PAA-7.7 g/L 140°F Bath | Fail | Fail |
| P(VPA-AA)-4.4 g/L 180°F Bath | Pass | Pass |
| P(VPA-AA)-7.2 g/L 180°F Bath | Pass | Pass |

Having described the presently preferred embodiments, it is to be understood that the invention may be otherwise embodied within the scope of the appended claims.

## Claims

1. A process for making polymer coated aluminum alloy sheet suitable for shaping into a food or beverage container body or container end panel, comprising:
(a) providing an aluminum alloy sheet having a surface portion comprising aluminum oxide or aluminum hydroxide;
(b) coating said surface portion with a primer composition comprising an aqueous solution consisting essentially of water and a vinylphosphonic acid-acrylic acid copolymer, thereby forming a primer layer comprising a reaction product of said copolymer and said oxide or hydroxide; and
(c) coating said primer layer with a coating composition comprising a polymer selected from the group consisting of polyvinyl chloride, epoxies and polyesters.

2. The process of claim 1, further comprising:
(d) shaping said sheet into a container body or container end panel.

3. The process of claim 1 or 2, further comprising:
(d') after (b) and before (c), rinsing said sheet to remove a portion of said copolymer unreacted with said oxide or hydroxide.

4. The process of claim 1, 2 or 3, wherein said copolymer comprises about 5-50 mole % vinylphosphonic acid.

5. The process of claim 4, wherein said copolymer comprises about 20-40 mole % vinylphosphonic acid.

6. The process of any of the preceding claims, wherein said primer composition comprises about 1-20 g/L of said copolymer dissolved in water.

7. The process of any of the preceding claims, wherein said primer composition has a temperature of about 120°-200°F (49°-93°C) in step (b).

8. The process of any of the preceding claims, wherein said coating composition further comprises an organic solvent.

9. The process of any of the preceding claims, wherein said coating composition further comprises particles of a pigment selected from the group consisting of titanium dioxide, silica and alumina.

10. The process of any of the preceding claims, wherein said aluminum alloy sheet comprises an aluminum-magnesium alloy of the AA 5000 series.

11. The process of any of the preceding claims, wherein said coating composition comprises polyvinyl chloride.

12. A polymer coated aluminum alloy sheet made by the process of any of the preceding claims.

13. The polymer coated aluminum alloy sheet of claim 12, comprising an aluminum-magnesium alloy of the AA 5000 series coated with a primer composition consisting essentially of a vinylphosphonic acid-acrylic acid copolymer comprising about 20-40 mole % vinylphosphonic acid and about 60-80 mole % acrylic acid, and a coating composition comprising polyvinyl chloride.

14. An aluminum alloy container body or container end panel made by the process of claim 3.

15. A polymer coated aluminum alloy sheet comprising:
(a) an aluminum alloy sheet comprising an aluminum-magnesium alloy of the AA 5000 series and having a surface portion comprising aluminum oxide or aluminum hydroxide;
(b) a primer layer comprising a reaction product of said oxide or hydroxide with a vinyl phosphonic acid-acrylic acid copolymer comprising about 20-40 mole % vinyiphosphonic acid units; and
(c) a coating composition adhered to said primer layer, said coating composition comprising a polymer selected from the group consisting of polyvinyl chloride, epoxies and polyesters.

16. A process for making polymer coated aluminum alloy sheet suitable for shaping into a food or beverage container body or container end panel, comprising:
(a) providing an aluminum alloy sheet comprising an aluminum-magnesium alloy of the AA 5000 series and having a surface portion comprising aluminum oxide or aluminum hydroxide;
(b) coating said surface portion with a composition comprising an aqueous solution consisting essentially of water and about 1/20 g/L of a vinyl phosphonic acid-acrylic acid copolymer, said copolymer comprising about 5-50 mole % vinyl phosphonic acid, thereby forming a layer comprising a reaction product of said copolymer and said oxide or hydroxide; and
(c) coating said layer with a coating composition comprising a polymer selected from the group consisting of polyvinyl chloride, epoxies and polyesters.

17. The process of claim 16, wherein said aqueous solution consists essentially of water and about 4-10 g/L of the copolymer.

## Patentansprüche

1. Verfahren zum Herstellen von polymerbeschichtetem Aluminiumlegierungsblech, geeignet für das Umformen zu einem Lebensmittel- oder Getränkebehälterkörper oder Behälter-Endblech, umfassend:
(a) Bereitstellen eines Aluminiumlegierungsbleches, das einen Oberflächenabschnitt hat, der Aluminiumoxid oder Aluminiumhydroxid aufweist;
(b) Beschichtendieses Oberflächenabschnittes mit einer Grundierungszusammensetzung, die eine wässrige Lösung aufweist, die im wesentlichen aus Wasser und einem Vinylphosphonsäure/Acryläure-Copolymer besteht, wodurch eine Grundierungsschicht erzeugt wird, die ein Reaktionsprodukt des Copolymers und des Oxids oder Hydroxids aufweist; sowie
(c) Beschichten dieser Grundierungsschicht mit einer Beschichtungszusammensetung, die ein Polymer aufweist, ausgewählt aus der Gruppe, bestehend aus Polyvinylchlorid, Epoxiden und Polyestern.

2. Verfahren nach Anspruch 1, ferner umfassend:
(d) Umformen des Bleches zu einem Behälterkörper oder einem Behälterendblech.

3. Verfahren nach Anspruch 1 oder 2, ferner umfassend:
(d') nach (b) und vor (c): Spülen des Bleches, um einen Teil des Copolymers zu entfernen, das nicht mit dem Oxid oder Hydroxid umgesetzt worden ist.

4. Verfahren nach Anspruch 1, 2 oder 3, bei welchem das Copolymer etwa 5% bis 50 Molprozent Vinylphosphonsäure aufweist.

5. Verfahren nach Anspruch 4, bei welchem das Copolymer etwa 20% bis 40 Molprozent Vinylphosphonsäure aufweist.

6. Verfahren nach einem der vorgenannten Ansprüche, bei welchem die Grundierungszusammensetzung etwa 1 bis 20 g/l des Copolymers aufgelöst in Wasser aufweist.

7. Verfahren nach einem der vorgenannten Ansprüche, bei welchem die Grundierungszusammensetzung in Schritt (b) eine Temperatur von 49° bis 93°C (120° bis 200°F) hat.

8. Verfahren nach einem der vorgenannten Ansprüche, bei welchem die Beschichtungszusammensetzung ferner ein organisches Lösemittel aufweist.

9. Verfahren nach einem der vorgenannten Ansprüche, bei welchem die Beschichtungszusammensetzung ferner Partikel aufweist, ausgewählt aus der Gruppe, bestehend Titandioxid, Siliciumdioxid und Aluminiumoxid.

10. Verfahren nach einem der vorgenannten Ansprüche, bei welchem das Aluminiumlegierungsblech eine Aluminium-Magnesiumlegierung der Reihe AA5000 aufweist.

11. Verfahren nach einem der vorgenannten Ansprüche, bei welchem die Beschichtungszusammensetzung Polyvinylchlorid aufweist.

12. Polymerbeschichtetes Aluminiumlegierungsblech, hergestellt nach dem Verfahren nach einem der vorgenannten Ansprüche.

13. Polymerbeschichtetes Aluminiumlegierungsblech nach Anspruch 12, aufweisend eine Aluminium-Magnesiumlegierung der Reihe AA5000, beschichtet mit einer Grundierungszusammensetzung, im wesentlichen bestehend aus einem Vinylphosphonsäure/Acryläure-Copolymer, das etwa 20% bis 40 Molprozent Vinylphosphonsäure und etwa 60% bis 80 Molprozent Acrylsäure aufweist, und mit einer Beschichtungszusammensetzung, die Polyvinylchlorid aufweist.

14. Aluminiumlegierung-Behälterkörper oder Behälter-Endblech, hergestellt nach dem Verfahren nach Anspruch 3.

15. Polymerbeschichtetes Aluminiumlegierungsblech, aufweisend.
(a) ein Aluminiumlegierungsblech, aufweisend eine Alumnium-Magnesiumlegierung der Reihe AA5000, und das einen Oberflächenabschnitt hat, der Aluminiumoxid oder Aluminiumhydroxid aufweist;
(b) eine Grundierungsschicht, die ein Reaktionsprodukt des Oxids oder des Hydroxids mit einem Vinylphosphonsäure/Acryläure-Copolymer aufweist, das etwa 20% bis 40 Molprozent Vinylphosphonsäure-Einheiten aufweist; sowie
(c) eine Beschichtungszusammensetzung, die an der Grundierungsschicht adhäriert ist, wobei die Beschichtungszusammensetzung ein Polymer aufweist, ausgewählt aus der Gruppe, bestehend aus Polyvinylchlorid, Epoxiden und Polyestem.

16. Verfahren zum Herstellen von polymerbeschichtetem Aluminiumlegierungsblech, geeignet für das Umformen zu einem Lebensmittel- oder Getränkebehälterkörper oder Behälter-Endblech, umfassend:
(a) Bereitstellen eines Aluminiumlegierungsbleches, aufweisend eine Alumnium-Magnesiumlegierung der Reihe AA5000 und das einen Oberflächenabschnitt hat, der Aluminiumoxid oder Aluminiumhydroxid aufweist;
(b) Beschichten dieses Oberflächenabschnittes mit einer Grundierungszusammensetzung, die eine wässrige Lösung aufweist, die im wesentlichen aus Wasser und 1 bis 20 g/l Vinylphosphonsäure/Acryläure-Copolymer besteht, wobei das Copolymer etwa 5% bis 50 Molprozent Vinylphosphonsäure aufweist, wodurch eine Schicht gebildet wird, die ein Reaktionsprodukt des Copolymers und des Oxids oder Hydroxids aufweist; sowie
(c) Beschichten der Schicht mit einer Besdchichtungszusammensetzung, die ein Polymer aufweist, das ausgewählt ist aus der Gruppe, bestehend Polyvinylchlorid, Epoxiden und Polyestern.

17. Verfahren nach Anspruch 16, bei welchem die wässrige Lösung im wesentlichen aus Wasser und etwa 4 bis 10 g/l Copolymer besteht.
(c) Beschichten dieser Grundierungsschicht mit einer Beschichtungszusammensetung, die ein Polymer aufweist, ausgewählt aus der Gruppe, bestehend aus Polyvinylchlorid, Epoxiden und Polyestern.

## Revendications

1. Procédé pour fabriquer une feuille d'alliage d'aluminium enrobée de polymère convenant pour le formage en corps de récipient à aliments ou à boisson ou en panneau d'extrémité de récipient, comprenant :
(a) la fourniture d'une feuille d'alliage d'aluminium possédant une portion de surface comprenant de l'oxyde d'aluminium ou de l'hydroxyde d'aluminium ;
(b) l'enrobage de ladite portion de surface avec une composition d'apprêt comprenant une solution aqueuse composée essentiellement d'eau et d'un copolymère d'acide acrylique-d'acide vinylphosphonique, formant ainsi une couche d'apprêt comprenant un produit de réaction dudit copolymère et dudit oxyde ou hydroxyde ; et
(c) l'enrobage de ladite couche d'apprêt avec une composition d'enrobage comprenant un polymère choisi parmi le groupe consistant en chlorure de polyvinyle, en époxy et en polyesters.

2. Procédé selon la revendication 1, comprenant en outre :
(d) le formage de ladite feuille en corps de récipient ou en panneau d'extrémité de récipient.

3. Procédé selon la revendication 1 ou 2, comprenant en outre :
(d') après (b) et avant (c), le rinçage de ladite feuille pour retirer une portion dudit copolymère non réagi avec ledit oxyde ou hydroxyde.

4. Procédé selon la revendication 1, 2 ou 3, dans lequel ledit copolymère comprend environ 5 à 50% par mole d'acide vinylphosphonique.

5. Procédé selon la revendication 4, dans lequel ledit copolymère comprend environ 20 à 40% par mole d'acide vinylphosphonique.

6. Procédé selon l'une quelconque des revendications précédentes, dans lequel ladite composition d'apprêt comprend environ 1 à 20 g/L dudit copolymère dissout dans de l'eau.

7. Procédé selon l'une quelconque des revendications précédentes, dans lequel ladite composition d'apprêt possède une température d'environ 120° à 200°F (49 à 93°C) à l'étape (b).

8. Procédé selon l'une quelconque des revendications précédentes, dans lequel ladite composition d'enrobage comprend en outre un solvant organique.

9. Procédé selon l'une quelconque des revendications précédentes, dans lequel ladite composition d'enrobage comprend des particules d'un pigment choisi parmi le groupe consistant en dioxyde de titane, silice et alumine.

10. Procédé selon l'une quelconque des revendications précédentes, dans lequel ladite feuille d'alliage d'aluminium comprend un alliage d'aluminium-magnésium de la série AA 5000.

11. Procédé selon l'une quelconque des revendications précédentes, dans lequel ladite composition d'enrobage comprend un chlorure de polyvinyle.

12. Feuille d'alliage d'aluminium enrobée de polymère fabriquée par le procédé selon l'une quelconque des revendications précédentes.

13. Feuille d'alliage d'aluminium enrobée de polymère selon la revendication 12, comprenant un alliage d'aluminium-magnésium de la série AA 5000 enrobé d'une composition d'apprêt composée essentiellement d'un copolymère d'acide acrylique-d'acide vinylphosphonique comprenant environ 20 à 40% par mole d'acide vinylphosphonique et environ 60 à 80% par mole d'acide acrylique, et d'une composition d'enrobage comprenant du chlorure de polyvinyle.

14. Corps de récipient en alliage d'aluminium ou panneau d'extrémité de récipient fabriqué par le procédé de la revendication 3.

15. Feuille d'alliage d'aluminium enrobée de polymère comprenant :
(a) une feuille d'alliage d'aluminium comprenant un alliage d'aluminium-magnésium de la série AA 5000 et possédant une portion de surface comprenant un oxyde d'aluminium ou un hydroxyde d'aluminium ;
(b) une couche d'apprêt comprenant un produit de réaction dudit oxyde ou dudit hydroxyde avec un copolymère d'acide acrylique-d'acide vinylphosphonique comprenant environ 20 à 40% par mole d'unités d'acide vinylphosphonique ; et
(c) une composition d'enrobage adhérée à ladite couche d'apprêt, ladite composition d'enrobage comprenant un polymère choisi parmi le groupe consistant en chlorure de polyvinyle, en époxy et en polyesters.

16. Procédé pour fabriquer une feuille d'alliage d'aluminium enrobée de polymère convenant pour le formage en corps de récipient pour aliments ou boisson ou en panneau d'extrémité de récipient, comprenant :
(a) la fourniture d'une feuille d'alliage d'aluminium comprenant un alliage d'aluminium-magnésium de la série AA 5000 et possédant une portion de surface comprenant un oxyde d'aluminium et un hydroxyde d'aluminium ;
(b) l'enrobage de ladite portion de surface avec une composition comprenant une solution aqueuse composée essentiellement d'eau et d'environ 1/20 g/L d'un copolymère d'acide acrylique-d'acide vinylphosphonique, ledit copolymère comprenant environ 5 à 50% par mole d'acide vinylphosphonique, formant ainsi une couche comprenant un produit de réaction dudit copolymère et dudit oxyde ou hydroxyde ; et
(c) l'enrobage de ladite couche avec une composition d'enrobage comprenant un polymère choisi parmi le groupe consistant en chlorure de polyvinyle, en époxy et en polyesters.

17. Procédé selon la revendication 16, dans lequel ladite solution aqueuse se compose essentiellement d'eau et d'environ 4 à 10 g/L du copolymère.
